# EUROPÄISCHE PATENTANMELDUNG

(11) **EP 2 662 669 A1**
(43) Veröffentlichungstag der Anmeldung: **13.11.2013**
(21) Anmeldenummer: 13002183.5
(22) Anmeldetag: 25.04.2013
(51) Int. Cl.: G01F 1/00, G01F 15/00

(54) **Messvorrichtung mit einem Fluidzähler**

(30) Priorität: 09.05.2012 DE 102012009076
(71) Anmelder: Sensus Spectrum LLC, Raleigh, NC 27615 (US)
(72) Erfinder: Kuhlemann, Holger, 31157 Sarstedt (DE); Frister, Mark, 30173 Hannover (DE)
(74) Vertreter: Patentanwälte Dr. Keller, Schwertfeger

(57) **Zusammenfassung**

Die Erfindung betrifft eine Messvorrichtung umfassend einen Fluidzähler (14; 114; 214; 314) zur Bestimmung des Durchflusses eines durch ein Messrohr (12) hindurchströmenden Fluids, wenigstens eine Messeinheit zur Erfassung physikalischer, chemischer oder biologischer Eigenschaften des Fluids, wenigstens eine Auswerteeinheit zur Auswertung der mittels der Messeinheit erfassten Daten, wenigstens eine Kommunikationseinheit, wobei die Einheiten Messeinheit, Auswerteeinheit und Kommunikationseinheit als ein oder mehrere Einzelmodule (16; 116; 216; 316) ausgebildet sind und jedes Einzelmodul (16; 116; 216; 316) mit dem Fluidzähler (14; 114; 214; 314) mechanisch verbindbar ist.

## Beschreibung

Die vorliegende Erfindung betrifft eine Messvorrichtung mit einem Fluidzähler, wenigstens einer Messeinheit zur Erfassung physikalischer, chemischer oder biologischer Eigenschaften des Fluids, wenigstens einer Auswerteeinheit zur Auswertung der mittels der Messeinheit erfassten Daten und wenigstens einer Kommunikationseinheit.

Bisher bekannte Fluidzähler geben mittels einer Vielzahl unterschiedlicher Techniken Auskunft über die pro Zeiteinheit durch einen Rohrabschnitt hindurchströmende Fluidmenge.

So werden beispielsweise bei der Versorgung von Gemeinden mit Trinkwasser sogenannte Großwasserzähler als Fluidzähler eingesetzt, um den Durchfluss eines durch ein Messrohr hindurchströmenden Fluids zu bestimmen.

Bei der Versorgung von Gemeinden mit Trinkwasser besteht jedoch nicht nur der Wunsch nach Informationen bezüglich der Menge des gelieferten Trinkwassers, sondern auch nach Informationen hinsichtlich der Qualität des gelieferten Trinkwassers.

Üblicherweise werden hierfür Trinkwasserproben genommen, die im Labor analysiert werden. Dieses Verfahren ist mit hohem Personalaufwand verbunden und somit vergleichsweise aufwändig. Die Folge ist, dass die Messintervalle zur Bestimmung der Qualität des Trinkwassers in der Regel sehr groß sind und Änderungen der Qualität des Trinkwassers nur sehr zeitverzögert erfasst werden.

Wünschenswert ist es, eine Vorrichtung bereitzustellen, bei der Änderungen der Qualität des durch eine Rohrleitung hindurchströmenden Fluids, wie etwa Trinkwasser, schnell und zuverlässig erfasst werden.

Aufgabe der vorliegenden Erfindung ist es, eine kompakte, vielseitig einsetzbare Vorrichtung bereitzustellen, die es ermöglicht, schnell und zuverlässig Informationen über physikalische, chemische oder biologische Eigenschaften eines durch eine Rohrleitung hindurchströmenden Fluids zu erhalten.

Erfindungsgemäß wird die Aufgabe durch eine Messvorrichtung gelöst, umfassend einen Fluidzähler zur Bestimmung des Durchflusses eines durch ein Messrohr hindurchströmenden Fluids, wenigstens eine Messeinheit zur Erfassung physikalischer, chemischer oder biologischer Eigenschaften des Fluids, wenigstens eine Auswerteeinheit zur Auswertung der mittels der Messeinheit erfassten Daten, wenigstens eine Kommunikationseinheit, wobei die Einheiten Messeinheit, Auswerteeinheit und Kommunikationseinheit als ein oder mehrere Einzelmodule ausgebildet sind und jedes Einzelmodul mit dem Fluidzähler mechanisch verbindbar ist.

Unter Fluid werden im Rahmen der Erfindung sowohl Flüssigkeiten als auch Gase verstanden.

Die Erfindung hat den Vorteil, dass an einer einzigen, in der Regel bereits vorhandenen, Messstelle in einem Rohrleitungsabschnitt neben der Bestimmung des Durchflusses des Fluids durch den Rohrleitungsabschnitt eine Bestimmung einer Vielzahl von fluidbezogenen Größen wie etwa Temperatur, pH-Wert, Druck, Nitrat- oder Chlorgehalt oder von Mikroorganismen möglich ist. Da alle für die Erfassung und Auswertung der Messdaten notwendigen Einheiten modulweise in der erfindungsgemäßen Messvorrichtung enthalten sind, ist die Messvorrichtung vergleichsweise kompakt und einfach einsetzbar.

Der modulare Aufbau der Messvorrichtung ermöglicht einen flexiblen Einsatz der Messvorrichtung, so dass je nach Anwendungsfall eine oder mehrere gewünschte fluidbezogene Größen bestimmt werden können.

Bei einer bevorzugten Ausführungsform ist die Verbindung zwischen Fluidzähler und Einzelmodul lösbar ausgebildet, so dass beispielsweise ein Modul gegen ein anderes ersetzt werden kann, wodurch sich die erfindungsgemäße Messvorrichtung kostengünstig in einer Vielzahl von Anwendungen einsetzen lässt.

Die Einzelmodule und der Fluidzähler sind vorzugsweise miteinander elektrisch und/oder akustisch verbindbar, so dass sie untereinander kommunizieren können. Zusätzlich oder alternativ kann eine optische Kommunikation vorgesehen sein.

Zum Fernauslesen der erfassten Daten ist es von Vorteil, dass die Kommunikationseinheit eine Datenübertragungseinheit zur Fernübertragung von Daten umfasst. Auf diese Weise ist es möglich, beispielsweise Qualitätsschwankungen des Fluids, die von der Messeinheit erfasst werden, schnell und zuverlässig zu erkennen.

Es ist weiterhin von Vorteil, dass eine Steuereinheit vorgesehen ist. Diese Steuereinheit kann beispielsweise eingesetzt werden, um Steuersignale an Armaturenteile weiterzuleiten. Insbesondere kann die Steuereinheit eingesetzt werden, um einen Sperrhahn oder Abschieber zu betätigen, wenn die Messeinheit einen Wert ermittelt hat, der oberhalb eines zulässigen Grenzwertes liegt. Hierbei ist es von Vorteil, dass die Steuereinheit als Einzelmodul ausgebildet ist, das mit dem Fluidzähler mechanisch verbindbar ist.

Zum Befestigen des Fluidzählers an einem Rohrabschnitt ist es von Vorteil, dass eine Haltevorrichtung zur Aufnahme des Fluidzählers vorgesehen ist.

Bei einer bevorzugten Ausführungsform ist wenigstens ein Einzelmodul an der Haltevorrichtung angeordnet. Die Haltevorrichtung kann hierbei beispielsweise band- oder gliederartig oder auch schalenförmig, insbesondere halbschalenförmig ausgebildet sein.

Alternativ kann der Fluidzähler wenigstens eine Aufnahmevorrichtung zur Aufnahme eines Einzelmoduls aufweisen. So kann beispielsweise der Fluidzähler ein Gehäuse aufweisen, an dessen Außenseite wenigstens eine Aufnahmevorrichtung zur Aufnahme eines Einzelmoduls angeordnet ist.

Bevorzugte Ausführungsformen werden anhand der beigefügten Zeichnungen näher beschrieben, in denen zeigen:
- Fig. 1: eine Messvorrichtung gemäß einer ersten Ausführungsform auf einem Rohrabschnitt,
- Fig. 2: eine Haltevorrichtung gemäß der ersten Ausführungsform,
- Fig. 3: den Fluidzähler und Einzelmodule gemäß der ersten Ausführungsform,
- Fig. 4: eine zweite Ausführungsform einer Messvorrichtung,
- Fig. 5: eine dritte Ausführungsform einer Messvorrichtung in Draufsicht,
- Fig. 6: die in Fig. 5 dargestellte Ausführungsanordnung von unten gesehen,
- Fig. 7: eine vierte Ausführungsform der vorliegenden Erfindung in perspektivischer Ansicht,
- Fig. 8: die in Fig. 7 dargestellte Ausführungsform vor der Montage an einem Rohrabschnitt.

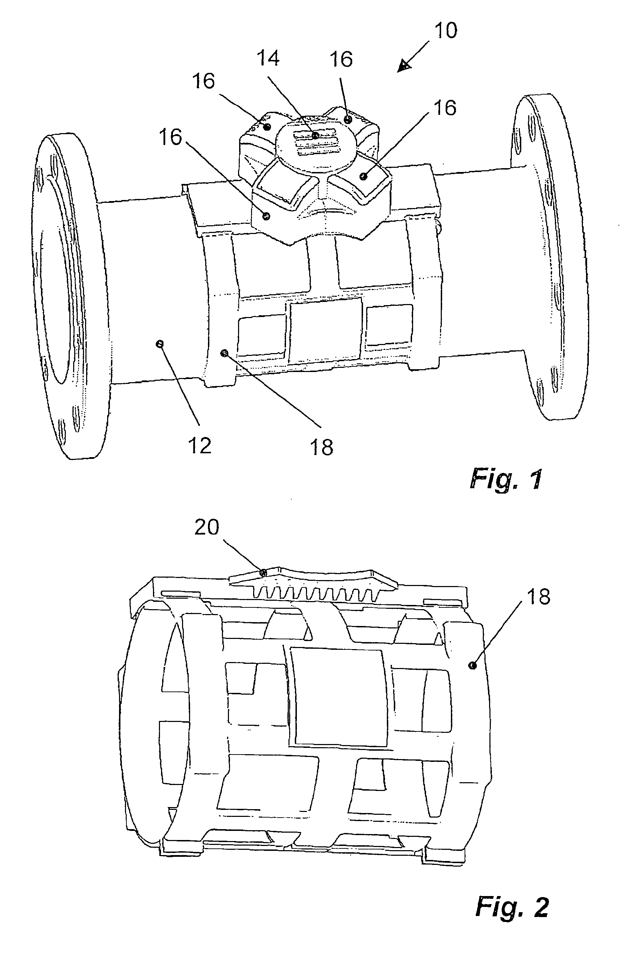

Fig. 1 zeigt eine erste Ausführungsform einer Messvorrichtung 10 an einem als Messrohr 12 ausgebildeten Rohrabschnitt. Die Messvorrichtung 10 umfasst einen Fluidzähler 14 und eine Vielzahl von Einzelmodulen 16, die kreisförmig um den Fluidzähler 14 angeordnet sind. Der Fluidzähler 14 ist an einer Haltevorrichtung 18 befestigt.

Wie am besten in Fig. 2 zu erkennen ist, ist die Haltevorrichtung 18 im Wesentlichen manschettenartig ausgebildet und umgreift den Rohrabschnitt 12. An der Außenseite der Haltevorrichtung 18 ist eine Trägerplatte 20 angeordnet, an der der Fluidzähler 14 befestigt werden kann.

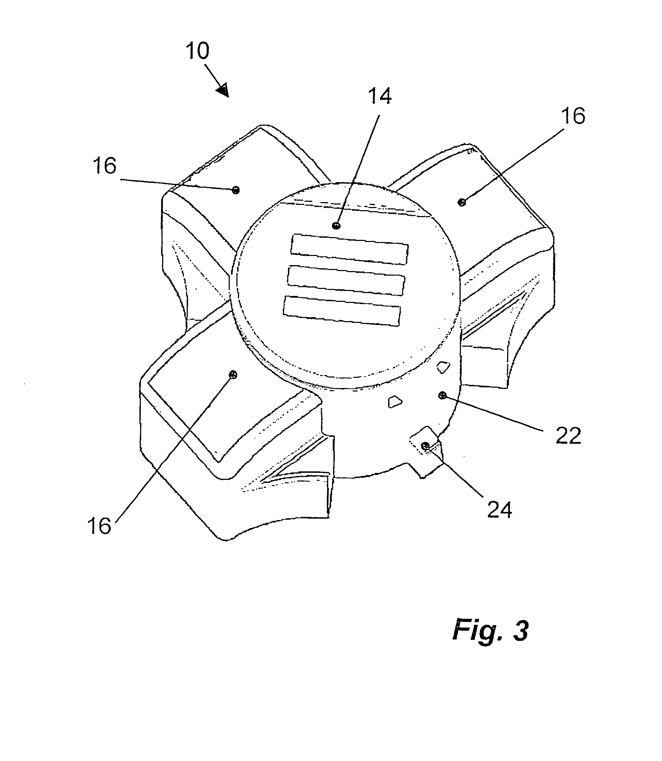

Fig. 3 zeigt den Fluidzähler 14 sowie drei Einzelmodule 16. Jedes Einzelmodul 16 hat eine eigene Aufgabe. Die dargestellten Einzelmodule 16 stehen beispielhaft stellvertretend für drei der folgenden: ein Modul mit einer Messeinheit zur Erfassung physikalischer, chemischer oder biologischer Eigenschaften des Fluids, ein Modul mit einer Auswerteeinheit zur Auswertung der mittels der Messeinheit erfassten Daten, ein Modul mit einer Kommunikationseinheit zur Anzeige und/oder Übertragung der erfassten und/oder ausgewerteten Daten, ein Modul mit einer Steuereinheit zur Steuerung von Armaturteilen wie etwa Absperrvorrichtungen oder ein Modul mit einer Batterieeinheit, wobei einzelne der genannten Einheiten auch in einem gemeinsamen Modul kombiniert sein können.

Der Fluidzähler 14 weist ein Gehäuse 22 auf, an dem eine Aufnahmevorrichtung 24 in Form von formschlüssigen Verbindungselementen zur lösbaren Aufnahme der Einzelmodule 16 angeordnet ist.

Die Einzelmodule 16 und der Fluidzähler 14 sind zur Kommunikation untereinander elektrisch und/oder akustisch miteinander verbunden. Wenn auch nicht dargestellt, so kann die Kommunikation der Einzelmodule 16 untereinander und mit dem Fluidzähler 14 zusätzlich oder alternativ auch optisch erfolgen.

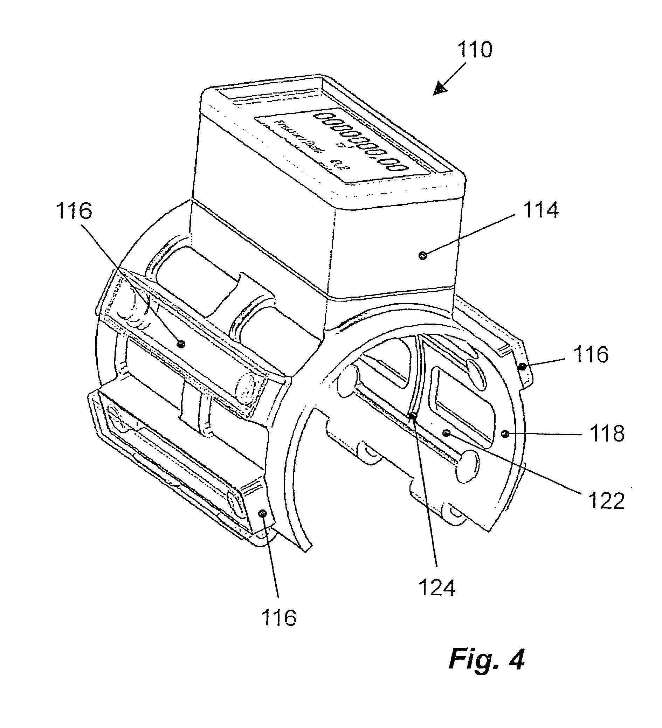

Fig. 4 zeigt eine zweite Ausführungsform einer Messvorrichtung 110. Der Fluidzähler 114 ist mit einer halbschalenförmigen klammerartigen Haltevorrichtung 118 verbunden. Die halbschalenförmige Haltevorrichtung 118 kann auf einen Rohrabschnitt aufgesetzt werden. Die Haltevorrichtung 118 umfasst in Axialrichtung verlaufende Längsrippen 122, an denen Einzelmodule 116 lösbar angeordnet sind. Auf der Innenseite der Halterung 118 sind elektrische Verbindungen 124 vorgesehen, die eine Kommunikation der Einzelmodule 116 untereinander und mit dem Fluidzähler 114 ermöglichen. Der Aufbau und die Funktion der Einzelmodule 116 entsprechen im Wesentlichen dem Aufbau und der Funktion der in Zusammenhang mit Fig. 3 beschriebenen Einzelmodule 16.

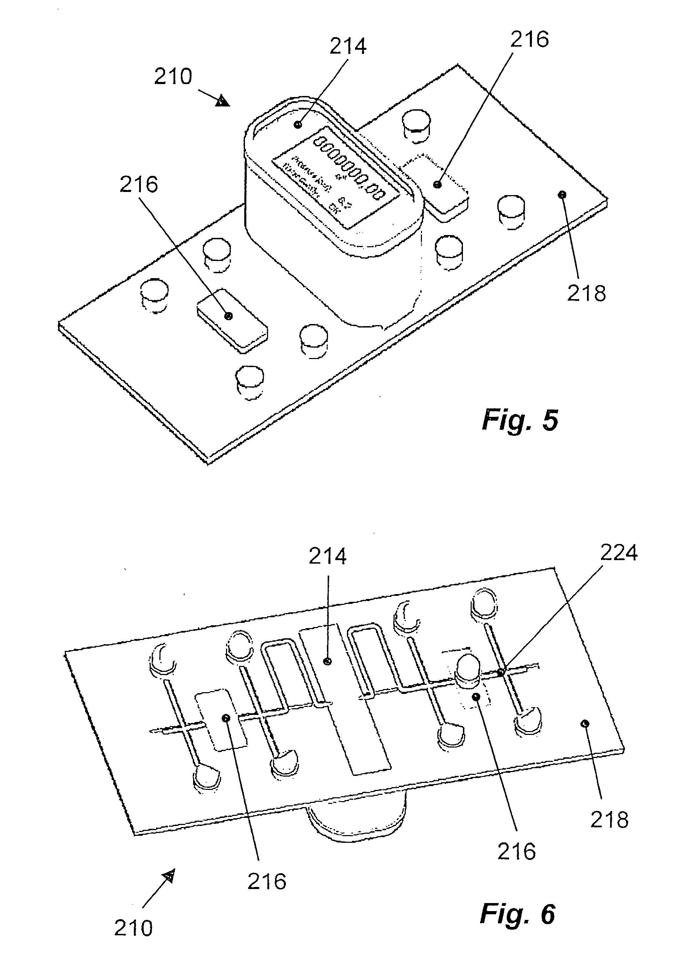

In Fig. 5 ist eine dritte Ausführungsform der Messvorrichtung 210 dargestellt. Die Haltevorrichtung 218 ist als elastisches Band ausgebildet, auf dem der Fluidzähler 214 und die Einzelmodule 216 angeordnet sind. Wie Fig. 6 zeigt, sind die Einzelmodule 216 auf der Unterseite der Haltevorrichtung 218 über elektrische Verbindungen 224 miteinander und mit dem Fluidzähler 214 verbunden, so dass diese untereinander kommunizieren können. Die Einzelmodule 216, die im Wesentlichen den gleichen Aufbau wie die bereits dargestellten Einzelmodule 16, 116 haben, sind fest mit dem elastischen Band verbunden. Bei einer nicht dargestellten alternativen Ausführungsform sind die Einzelmodule 216 lösbar mit dem elastischen Band verbunden.

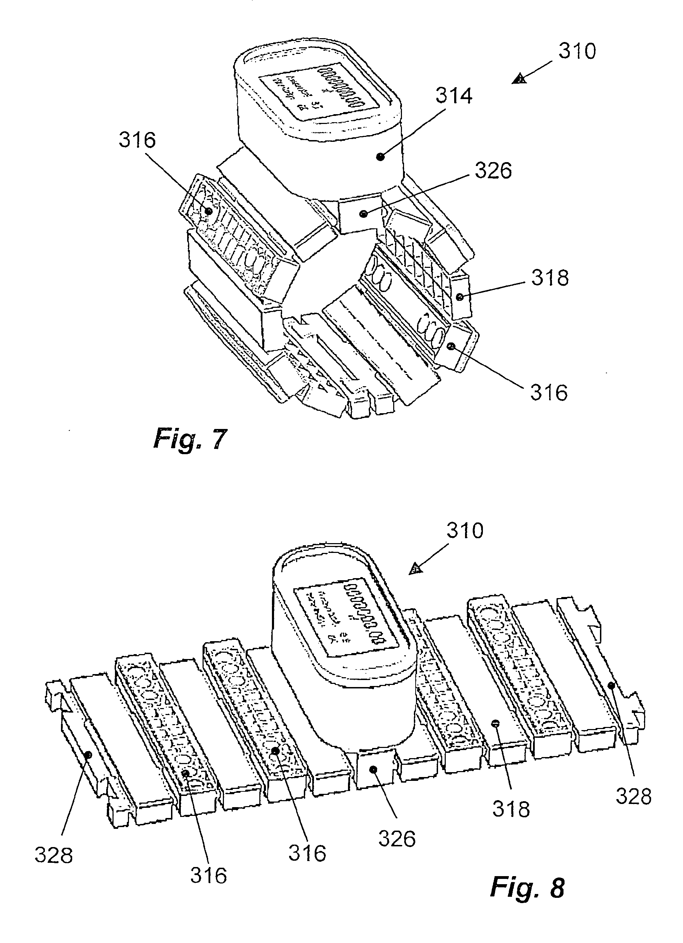

Eine vierte Ausführungsform einer Messvorrichtung 310 ist in Fig. 7 dargestellt. Bei dieser Ausführungsform ist die Haltevorrichtung 318 als Gliederband ausgebildet ist. Ein oder mehrere der Glieder können als Einzelmodule 316 ausgebildet sein, die entweder direkt miteinander oder über Abstandsglieder miteinander mechanisch verbunden sind und über elektrische Verbindungen miteinander kommunizieren.

Der Fluidzähler 314 ist an einem Kettenglied 326 befestigt.

Wie insbesondere Fig. 8 zeigt, ist ein Verschluss 328 vorgesehen, um die Haltevorrichtung 318 an einem Rohrabschnitt zu befestigen.

Die Glieder können beliebig miteinander verbunden werden, so dass je nach Einsatz der Messvorrichtung 310 die gewünschten Module 316 zusammengestellt werden können.

Allen Ausführungsformen ist gemeinsam, dass sie einen Fluidzähler 14, 114, 214, 314 umfassen, der mit den Einzelmodulen 16, 116, 216, 316 elektrisch und/oder akustisch verbunden ist, so dass die Einzelmodule 16, 116, 216, 316 und/oder der Fluidzähler 14, 114, 214, 314 miteinander kommunizieren. Die Einzelmodule 16, 116, 216, 316 weisen hierbei unterschiedliche Funktionen auf und lassen sich je nach Einsatzzweck beliebig miteinander kombinieren oder austauschen.

Bei einer beispielhaften Ausführungsform der dargestellten Messvorrichtungen 10, 110, 210, 310 umfasst diese einen Fluidzähler 14, 114, 214, 314 sowie eine Messeinheit zur Erfassung physikalischer, chemischer oder biologischer Eigenschaften des Fluids, eine Auswerteeinheit zur Auswertung der mittels der Messeinheit erfassten Daten, eine Kommunikationseinheit und eine Steuereinheit, wobei die Messeinheit, die Auswerteeinheit, die Kommunikationseinheit und die Steuereinheit als Einzelmodule 16, 116, 216, 316 ausgebildet sind und elektrisch miteinander sowie mit dem Fluidzähler kommunizieren. Alternativ kommunizieren die Einzelmodule 16, 116, 216, 316 und der Fluidzähler 14, 114, 214, 314 akustisch miteinander.

Der Fluidzähler 14, 114, 214, 314 bestimmt den Durchfluss eines Fluids wie etwa Trinkwasser durch einen Rohrabschnitt. Mit Hilfe der Messeinheit zur Erfassung physikalischer, chemischer oder biologischer Eigenschaften des Fluids lässt sich eine fluidbezogene Größe wie etwa Temperatur, pH-Wert oder auch die Konzentration verschiedener Stoffe wie etwa Nitrat, Blei, Fluor bestimmten und mittels der Auswerteeinheit auswerten. Die Kommunikationseinheit zeigt die vom Fluidzähler und von der Messeinheit erfassten und/oder von der Auswerteeinheit ausgewerteten Daten an, wobei die Kommunikationseinheit eine Datenübertragungseinheit aufweist, um die erfassten und/oder ausgewerteten Daten mittels Fernübertragung an eine Fernauslesestelle zu übermitteln. Mit Hilfe der Steuereinheit wird ein Steuersignal weitergegeben, um beispielsweise ein Ventil im Rohrleitungsabschnitt zu schließen, wenn der von der Messeinheit erfasst Messwert einen vorgegebenen Grenzwert überschreitet.

Bei einer alternativen Ausführungsform sind keine Steuereinheit und keine Datenübertragungseinheit vorgesehen.

Mit Hilfe eines oder mehrerer als Messeinheit ausgelegten Einzelmodule lassen sich eine Vielzahl verschiedener Parameter des Fluids bestimmen. Beispielsweise kann ein als Messeinheit ausgelegtes Einzelmodul geeignet sein, den Druck, die Temperatur, den pH-Wert des Wassers oder auch die Konzentration verschiedener Stoffe wie etwa Nitrat, Blei, Fluor etc zu bestimmen. Eine Kombination mehrerer Messeinheiten in einer Messvorrichtung ermöglicht die gleichzeitige Bestimmung einer Vielzahl von verschiedenen Parametern des Fluids.

Wenn bei den dargestellten Ausführungsformen die Einzelmodule in der Regel lösbar mit der Haltevorrichtung verbunden sind, so liegt es ebenfalls im Rahmen der Erfindung, wenn einige oder alle Einzelmodule einer Messvorrichtung fest mit der Haltevorrichtung verbunden sind.

Bei einer nicht dargestellten Ausführungsform einer Messvorrichtung ist eine Haltevorrichtung zur Aufnahme des Fluidzählers vorgesehen, wobei die Einzelmodule sowohl in einer Aufnahmevorrichtung am Gehäuse des Fluidzählers als auch an der Haltevorrichtung lösbar angeordnet sind und über elektrische oder akustische Verbindungen untereinander und mit dem Fluidzähler kommunizieren.

Die erfindungsgemäße Messvorrichtung eignet sich insbesondere für die Bestimmung des Durchflusses und der Qualität von Trinkwasser durch eine Versorgungsleitung beispielsweise einer Gemeinde unter Verwendung eines Großwasserzählers als Fluidzähler.

Die erfindungsgemäße Messvorrichtung ist jedoch auch bei der Bestimmung von Durchflüssen und Qualitätsparametern unterschiedlicher Fluide unter Verwendung jeder Art von Fluidzähler einsetzbar.

## Patentansprüche

1. Messvorrichtung umfassend
einen Fluidzähler (14; 114; 214; 314) zur Bestimmung des Durchflusses eines durch ein Messrohr (12) hindurchströmenden Fluids,
wenigstens eine Messeinheit zur Erfassung physikalischer, chemischer oder biologischer Eigenschaften des Fluids,
wenigstens eine Auswerteeinheit zur Auswertung der mittels der Messeinheit erfassten Daten,
wenigstens eine Kommunikationseinheit,
wobei die Einheiten Messeinheit, Auswerteeinheit und Kommunikationseinheit als ein oder mehrere Einzelmodule (16; 116; 216; 316) ausgebildet sind und jedes Einzelmodul (16; 116; 216; 316) mit dem Fluidzähler (14; 114; 214; 314) mechanisch verbindbar ist.

2. Messvorrichtung nach Anspruch 1, **dadurch gekennzeichnet, dass** die Verbindung zwischen Fluidzähler (14; 114; 214; 314) und Einzelmodul (16; 116; 216; 316) lösbar ausgebildet ist.

3. Messvorrichtung nach einem der vorhergehenden Ansprüche, **dadurch gekennzeichnet, dass** das Einzelmodul (16; 116; 216; 316) und der Fluidzähler (14; 114; 214; 314) elektrisch und/oder akustisch miteinander verbindbar sind.

4. Messvorrichtung nach einem der vorhergehenden Ansprüche, **dadurch gekennzeichnet, dass** die Kommunikationseinheit eine Datenübertragungseinheit zur Fernübertragung von Daten umfasst.

5. Messvorrichtung nach einem der vorhergehenden Ansprüche, **dadurch gekennzeichnet, dass** eine Steuereinheit vorgesehen ist.

6. Messvorrichtung nach Anspruch 5, **dadurch gekennzeichnet, dass** die Steuereinheit als Einzelmodul (16; 116; 216; 316) ausgebildet ist, das mit dem Fluidzähler (14; 114; 214; 314) mechanisch verbindbar ist.

7. Messvorrichtung nach einem der vorhergehenden Ansprüche **dadurch gekennzeichnet, dass** eine Haltevorrichtung (18; 118; 218; 318) zur Aufnahme des Fluidzählers (14; 114; 214; 314) vorgesehen ist.

8. Messvorrichtung nach Anspruch 7, **dadurch gekennzeichnet, dass** wenigstens ein Einzelmodul (116; 216; 316) an der Haltevorrichtung (118; 218; 318) angeordnet ist.

9. Messvorrichtung nach Anspruch 7 oder 8, **dadurch gekennzeichnet, dass** die Haltevorrichtung (218; 318) band- oder gliederartig ausgebildet ist.

10. Messvorrichtung nach Anspruch 7 oder 8, **dadurch gekennzeichnet, dass** die Haltevorrichtung (18; 118) schalenförmig, insbesondere halbschalenförmig ausgebildet ist.

11. Messvorrichtung nach einem der vorhergehenden Ansprüche, **dadurch gekennzeichnet, dass** der Fluidzähler wenigstens eine Aufnahmevorrichtung zur Aufnahme eines Einzelmoduls aufweist.

12. Messvorrichtung nach Anspruch 11, **dadurch gekennzeichnet, dass** der Fluidzähler (14) ein Gehäuse aufweist, an dessen Außenseite wenigstens eine Aufnahmevorrichtung (24) zur Aufnahme eines Einzelmoduls (16) angeordnet ist.
